# EUROPEAN PATENT APPLICATION

(11) **EP 4 650 942 A1**
(43) Date of publication of application: **19.11.2025**
(21) Application number: 25171595.9
(22) Date of filing: 22.04.2025
(51) Int. Cl.: G06F 8/33, G06F 8/41

(54) **COMPACTING CODE USING STRUCTURAL INFORMATION WITH REDUCED ERRORS**

(30) Priority: 17.05.2024 US 202418668107
(71) Applicant: Microsoft Technology Licensing, LLC, Redmond, WA 98052 (US)
(72) Inventor: DIMA, Alexandru loan, Redmond, Washington, 98052 (US); ABDULLAEV, Ulugbek, Redmond, Washington, 98052 (US); DIETERICHS, Henning, Redmond, Washington, 98052 (US)
(74) Representative: CMS Cameron McKenna Nabarro Olswang LLP

(57) **Abstract**

Examples enable dynamic eliding of code using structural information for syntactic validity. An identified code segment from an original document and a request for a large language model (LLM) to perform an action associated with the identified code segment is received. A compacted abstract syntax tree (AST) including removable nodes is generated based on the original document. The removable nodes are scored for relevance to the identified code segment. Code segments corresponding to the most relevant removable nodes are added to a compacted document without exceeding a configurable token limit for prompts to the LLM. A modified prompt including the identified code segment and the most relevant code segments is provided to the LLM. The edits received from the LLM in response to the modified prompt are mapped into the original document to create a syntactically valid edited version of the original source code while minimizing resource usage.

## Description

### BACKGROUND

Large language models (LLMs) can assist users with drafting and editing text, such as computer source code. A user typically submits a request to the LLM to perform an action on one or more portions of text or source code via a request input submitted to the LLM as a prompt. LLM prompts should be kept as short as possible because the longer the prompt, the more expensive the LLM request in terms of computing system resources consumed in generating a response to the request. There are also hard limits to the maximum count of tokens that can be sent to a LLM as part of a request. Oftentimes, an entire source code file does not fit in the token budget for a single LLM request.

### SUMMARY

Some examples provide a system for dynamically eliding source code using an abstract syntax tree (AST). The system identifies a code segment from an original document and a request for an action associated with the identified code segment for a prompt to a large language model (LLM) via a user interface device. A compacted tree including a subset of removable nodes selected from a plurality of nodes associated with the AST for the original document is generated. A removable node is an element in the AST corresponding to a portion of code that maintains syntactic validity when removed from the original document. A set of relevant nodes in the subset of removable nodes are identified based on a plurality of scores associated with the subset of removable nodes. A compacted document including the identified code segment and a set of relevant code segments corresponding to each node in the set of relevant nodes for inclusion in a modified prompt is generated. The modified prompt is submitted to the LLM. The modified prompt includes the request for the action associated with the identified code segment and the compacted document. If a response to the modified prompt from the LLM includes a set of edits, the edits are integrated into the original document to form an edited version of the original document. The edited version of the original document is provided to a user via the user interface device in a syntactically correct form.

Other examples provide a method for dynamically eliding source code using an AST. A prompt is received. The prompt includes a code segment selected from an original document and a request for an action associated with the selected code segment via a user interface device. A compacted tree is generated. A set of relevant nodes is identified in the subset of removable nodes based on a plurality of scores associated with the subset of removable nodes. A compacted document is generated that includes the selected code segment and a set of relevant code segments corresponding to each node in the set of relevant nodes for inclusion in a modified prompt. A modified prompt is submitted to an LLM. The modified prompt includes the request for the action associated with the selected code segment and the compacted document. The edits are copied into the original document to form an edited version of the original document in response to receiving a response to the modified prompt from the LLM including a set of edits. The edited version of the original document is presented to a user via the user interface device. The edited version of the original document is syntactically correct.

Still other examples provide a computer storage devices having computer-executable instructions stored thereon, which, upon execution by a computer, cause the computer to receive a prompt including a selected code segment from an original document and a request for an action associated with the selected code segment. The AST for the original document is obtained. The AST includes a plurality of nodes, each node corresponding to a segment of code in the original document. A compacted tree is generated. A removable node is an element in the AST corresponding to a portion of code that is removable from the original document without introducing syntactical errors. A score is generated for each removable node in the subset of removable nodes using a metric. The score for each removable node indicating a functional relatedness of each code segment corresponding to the removable node relative to the selected code segment. A set of relevant nodes in the subset of removable nodes is identified based on the score for each removable node. A set of relevant code segments corresponding to each node in the set of relevant nodes are selected for inclusion in a modified prompt. A compacted document is generated. A modified prompt is submitted to the LLM. The modified prompt includes the compacted document. The original document is modified to include a set of edits provided by the LLM in response to the modified prompt.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWINGS

FIG. 1 is an exemplary block diagram illustrating a system for dynamically compacting code using a compacted abstract syntax tree (AST).
FIG. 2 is an exemplary block diagram illustrating a prompt manager for generating a modified query used to obtain syntactically valid responses from a large language model (LLM).
FIG. 3 is an exemplary flow chart illustrating operation of the computing device to generate a syntactically valid edited version of an original document using compacted code.
FIG. 4 is an exemplary flow chart illustrating operation of the computing device to identify relevant code segments for inclusion in a compacted document.
FIG. 5 is an exemplary flow chart illustrating operation of the computing device to create a mapping between code segments in a compacted document and an original source code document.
FIG. 6 is an exemplary flow chart illustrating operation of the computing device to re-integrate edits received from an LLM in response to a modified prompt back into an original source code document.
FIG. 7 is a block diagram of an example computing device for implementing aspects disclosed herein and is designated as computing device.

Corresponding reference characters indicate corresponding parts throughout the drawings.

### DETAILED DESCRIPTION

A more detailed understanding can be obtained from the following description, presented by way of example, in conjunction with the accompanying drawings. The entities, connections, arrangements, and the like that are depicted in, and in connection with the various figures, are presented by way of example and not by way of limitation. As such, any and all statements or other indications as to what a particular figure depicts, what a particular element or entity in a particular figure is or has, and any and all similar statements, that can in isolation and out of context be read as absolute and therefore limiting, can only properly be read as being constructively preceded by a clause such as "In at least some examples, ..." For brevity and clarity of presentation, this implied leading clause is not repeated *ad nauseum.*

The simplest form of making code fit a maximum size threshold for a prompt to the large language model (LLM) is to cut it. If there is a selection in a region of an original document, such as a source code file, a simple approach would be to include some lines from above the contiguous selected code segment and some lines from below the contiguous selected code segment. However, the lines of code closest to the selected code segment are not necessarily the most relevant lines to be included in the prompt. They might contain a lot of implementation detail of other classes or other methods that are not really relevant to the LLM prompt at hand, which might not help the LLM provide desired replies. Cutting a source code file can result in sending source code that is not syntactically valid. Providing syntactically invalid code segments with a prompt to an LLM frequently leads to increased confusion and decreased positive outcomes from the LLM replies. When sending source code with unmatched brackets or "dangling" (like a method inside a class without sending the class declaration), the LLM reply often hallucinates a different class name in its response. The term "hallucinates" refers to the LLM attempting to incorrectly fill in "gaps" in the contiguous but abridged source code segment provided to the LLM. The LLM replies typically need to be parsed to interpret them and generate text edits that can be reapplied to the sent source code. Sending contiguous blocks of code makes applying edits relatively easy, but frequently results in production of invalid edited code which is of little or no value to the user.

Another solution includes taking outline information from the original document (source code file). Based on that, the source code can be elided to eliminate portions of the source code in an attempt to keep the code provided to the LLM below the maximum threshold token limit. However, the outline information is an all-or-nothing approach in which a method, function or a class declaration is either included in its entirety or elided (removed) from the compacted document in its entirety. This solution does not permit including only a portion of a method, function, or class declaration. This limitation can result in a failure to keep all of the most important lines of code in the document provided to the LLM and/or failure to keep the document within the token limits for the LLM prompt.

Therefore, it may be necessary to submit only a selected portion of the original document to the LLM with the request, rather than including the entire document. In such cases, the LLM does not have access to the entire original document. The selected portion of the original document frequently includes syntax errors and lacks context, rending any modifications provided in the LLM output invalid and unusable, negating any benefits of employing the LLM. This can be expensive, time-consuming, and frustrating for users, in addition to wasting system resources consumed in production of invalid and useless document edits.

Referring to the figures, examples of the disclosure enable dynamically compacting code using structural information to identify the most relevant code segments for provision to an LLM while preserving syntactical validity of the code segments. In some examples, the system includes an algorithm which works over a transformed AST tree (compacted tree) data structure that allows the system to elide source code using a dynamic and configurable cost function. The resulting compacted document is shorter to fall within the token limits of the LLM while maintaining the structural properties of the code. The system selects only regions which have the best score indicating relevance to a code segment selected by the user from the original document to ensure the LLM is provided with non-contiguous code segments most likely to be both contextually useful as well as syntactically valid.

In other examples, the system produces a compacted document for provision to an LLM with a user request for an action to be performed by the LLM where the compacted document is syntactically valid. This results in production of more reliable and responsive edits by the LLM which can more accurately be mapped back into the original document with a reduced error rate.

The system, in other examples, generates a compacted tree including removable nodes that can be elided from a document without creating syntactic errors in the code. This enables the LLM to generate useful edits which are responsive to the user request while conserving memory and reducing processor load which would otherwise be consumed in correcting erroneous output of the LLM and/or manually generating an edited version of the original document due to syntactic errors in the prompts.

Aspects of the disclosure further enable identifying syntactically valid code segments which are most relevant to a selected portion of source code for use in generating a compacted document for inclusion in a prompt to an LLM. The computing device operates in an unconventional manner by dynamically creating a compacted tree from an AST that includes portions of the most relevant code segments for providing context and syntactically validity to an abridged version of the original source code document without exceeding a threshold token limit. In this manner, the computing device is used in an unconventional way, and allows for accurate and reliable generation of edited documents from an LLM using portions of source code from an original document without causing syntactic errors in the portions of the source code provided to the LLM. This results in more accurate and reliable edited document creation using the LLM-generated responses. This reduces errors in the LLM output while also reducing resource usage, such as processor, memory, and network resources, which would otherwise be consumed in generating inaccurate and erroneous edited documents. In this manner, the system improves the functioning of the underlying computing device.

Other examples enable presentation of edited versions of documents that contain edits generated automatically by an LLM in response to a user prompt. The output edited documents are presented to a user via a user interface device for review, thereby further improving user efficiency via UI interaction and increasing user interaction performance.

Other examples provide a prompt manager that elides an original document to produce a compacted document containing the most relevant portions of code relative to the user request and the code segment selected by the user from the original document, including by eliding portions of a function, method, or other code segments within the original document. The system places the most relevant parts of a file containing source code into a prompt while keeping syntactically valid structure dynamically such that the compacted document can adapt to any threshold size. This enables the system to keep only parts of a function, for example the statements that are closest by distance or by functional (semantic) similarity with the current code of interest. In this manner, the LLM is provided with the most relevant, non-contiguous code segments relative to the user request and selected code segment.

In still other examples, the system creates an abbreviated or shorter compacted version of an original source code document. The compacted version of the document is transmitted to an LLM for use in responding to a user request. The system avoids transmitting the larger, original document. This reduces network bandwidth usage significantly and further enables use of larger original documents in conjunction with editing requests by users for improved user efficiency and productivity.

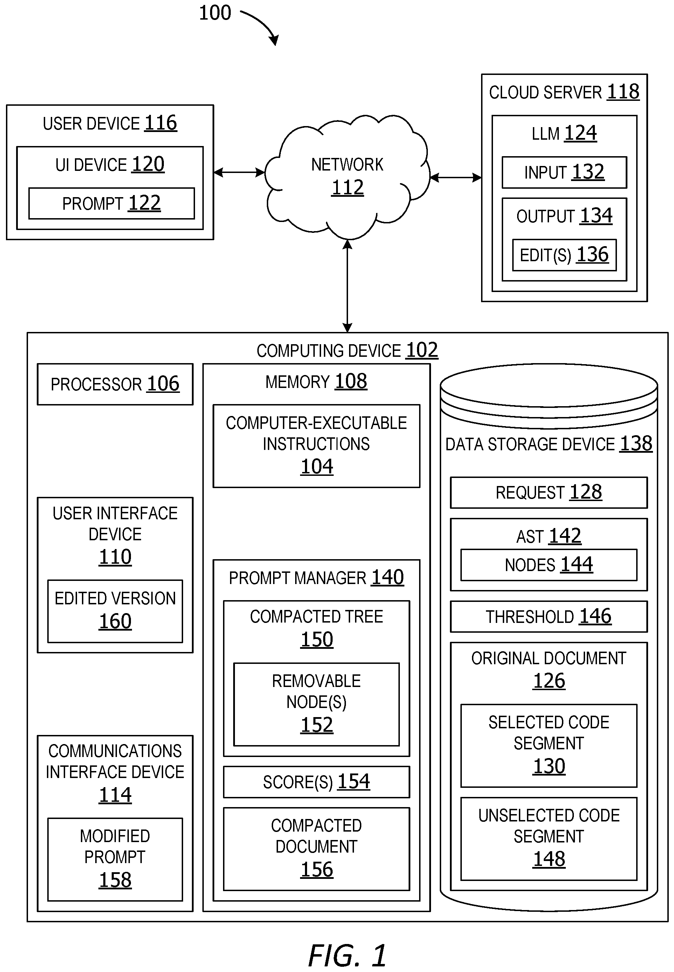

Referring again to FIG. 1, an exemplary block diagram illustrates a system 100 for dynamically compacting code using a compacted abstract syntax tree (AST). In the example of FIG. 1, the computing device 102 represents any device executing computer-executable instructions 104 (e.g., as application programs, operating system functionality, or both) to implement the operations and functionality associated with the computing device 102. The computing device 102, in some examples includes a mobile computing device or any other portable device. A mobile computing device includes, for example but without limitation, a mobile telephone, laptop, tablet, computing pad, netbook, gaming device, and/or portable media player. The computing device 102 can also include less-portable devices such as servers, desktop personal computers, kiosks, or tabletop devices. Additionally, the computing device 102 can represent a group of processing units or other computing devices.

In some examples, the computing device 102 has at least one processor 106 and a memory 108. The computing device 102, in other examples includes a user interface device 110.

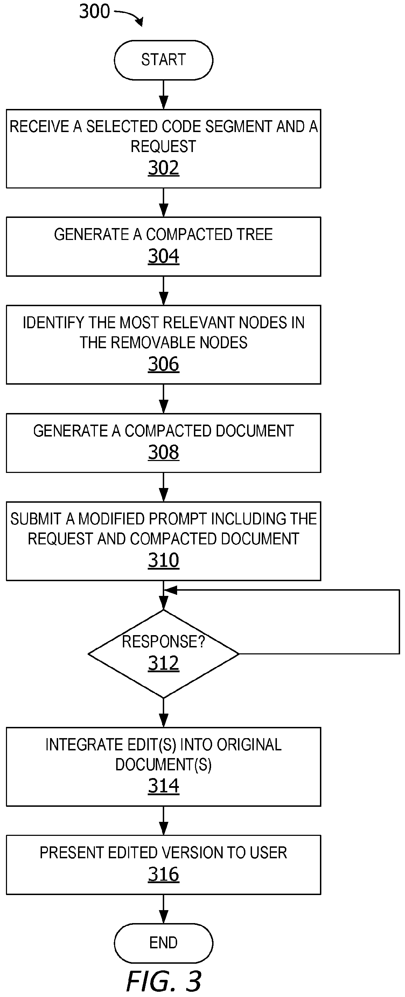

The processor 106 includes any quantity of processing units and is programmed to execute the computer-executable instructions 104. The computer-executable instructions 104 are performed by the processor 106, performed by multiple processors within the computing device 102 or performed by a processor external to the computing device 102. In some examples, the processor 106 is programmed to execute instructions such as those illustrated in the figures (e.g., FIG. 3, FIG. 4, FIG. 5, and FIG. 6).

The computing device 102 further has one or more computer-readable media such as the memory 108. The memory 108 includes any quantity of media associated with or accessible by the computing device 102. The memory 108 in these examples is internal to the computing device 102 (as shown in FIG. 1). In other examples, the memory 108 is external to the computing device (not shown) or both (not shown). The memory 108 can include read-only memory.

The memory 108 stores data, such as one or more applications. The applications, when executed by the processor 106, operate to perform functionality on the computing device 102. The applications can communicate with counterpart applications or services such as web services accessible via a network 112. In an example, the applications represent downloaded client-side applications that correspond to server-side services executing in a cloud.

In other examples, the user interface device 110 includes a graphics card for displaying data to the user and receiving data from the user. The user interface device 110 can also include computer-executable instructions (e.g., a driver) for operating the graphics card. Further, the user interface device 110 can include a display (e.g., a touch screen display or natural user interface) and/or computer-executable instructions (e.g., a driver) for operating the display. The user interface device 110 can also include one or more of the following to provide data to the user or receive data from the user: speakers, a sound card, a camera, a microphone, a vibration motor, one or more accelerometers, a BLUETOOTH^{®} brand communication module, wireless broadband communication (LTE) module, global positioning system (GPS) hardware, and a photoreceptive light sensor.

The network 112 is implemented by one or more physical network components, such as, but without limitation, routers, switches, network interface cards (NICs), and other network devices. The network 112 is any type of network for enabling communications with remote computing devices, such as, but not limited to, a local area network (LAN), a subnet, a wide area network (WAN), a wireless (Wi-Fi) network, or any other type of network. In this example, the network 112 is a WAN, such as the Internet. However, in other examples, the network 112 is a local or private LAN.

In some examples, the system 100 optionally includes a communications interface device 114. The communications interface device 114 includes a network interface card and/or computer-executable instructions (e.g., a driver) for operating the network interface card. Communication between the computing device 102 and other devices, such as but not limited to a user device 116 and/or a cloud server 118, can occur using any protocol or mechanism over any wired or wireless connection. In some examples, the communications interface device 114 is operable with short range communication technologies such as by using near-field communication (NFC) tags.

The user device 116 represents any device executing computer-executable instructions. The user device 116 can be implemented as a mobile computing device, such as, but not limited to, a wearable computing device, a mobile telephone, laptop, tablet, computing pad, netbook, gaming device, and/or any other portable device. The user device 116 includes at least one processor and a memory. The user device 116 can also include a user interface (UI) device 120. The UI device 120 is a device for receiving input and/or providing output to a user, such as, but not limited to, the user interface device 110.

In some examples, a user generates an original prompt 122 via the UI device 120. The prompt 122 is a prompt intended for a LLM, such as, but not limited to, the LLM 124. The prompt 122 in this example includes a segment of code selected from an original document 126 and a request 128 for an action to be taken by the LLM 124 with regard to the selected code segment 130. The selected code segment is a segment of code selected by a user from an original document or a code segment otherwise identified by the system.

The LLM 124 is a machine learning (ML) language model trained on large quantities of unlabeled data to perform natural language processing tasks. The LLM 124, in some examples, includes transformer models such as, but not limited to, bidirectional encoder representations from transformers (BERT) models and/or generative pre-trained transformer (GPT) models. However, the LLM 124 is not limited to BERT and GPT models. The LLM 124 can be implemented as any type of large language model for receiving input 132 prompts and generating output 134 edit(s) 136 in response to the input prompts, such as, but not limited to, the prompt 122.

The cloud server 118 is a logical server providing services to the computing device 102 or other clients, such as, but not limited to, the user device 116. The cloud server 118 is hosted and/or delivered via the network 112. In some non-limiting examples, the cloud server 118 is associated with one or more physical servers in one or more data centers. In other examples, the cloud server 118 is associated with a distributed network of servers.

The system 100 can optionally include a data storage device 138 for storing data, such as, but not limited to an AST 142 having a plurality of nodes 144, a threshold 146, an original document 126 and/or a request 128. The AST 142 is a syntax tree having one or more nodes 144 representing code segments in an original source code document, such as, but not limited to, the original document 126. The original document 126 is a document containing a selected code segment 130 and one or more unselected code segments 148. The selected code segment 130 can also be referred to as an identified code segment.

The selected code segment 130 is a contiguous code segment. The unselected code segments 148 include one or more contiguous code segments as well as non-contiguous code segments. A non-contiguous code segment is a portion of code that is not contiguous with the selected code segment. In other words, segments of code or portions of a segment of code may be missing or skipped in a non-contiguous code segment such that there are gaps or missing portions of code when the code is read from the beginning of the code segment to the end of the code segment. A contiguous code segment is a segment of code that is continuous such that no portion of the code is missing or skipped from the beginning of the code segment to the end of the code segment.

The threshold 146 is a character limit or token limit associated with the maximum size for a prompt provided to the LLM 124. The threshold 146 in some examples is a maximum character limit or a maximum token limit. In other examples, the threshold 146 is a threshold range of characters or tokens that is permissible for a given prompt.

The data storage device 138 can include one or more different types of data storage devices, such as, for example, one or more rotating disks drives, one or more solid state drives (SSDs), and/or any other type of data storage device. The data storage device 138 in some non-limiting examples includes a redundant array of independent disks (RAID) array. In some non-limiting examples, the data storage device(s) provide a shared data store accessible by two or more hosts in a cluster. For example, the data storage device may include a hard disk, a redundant array of independent disks (RAID), a flash memory drive, a storage area network (SAN), or other data storage device. In other examples, the data storage device 138 includes a database.

The data storage device 138 in this example is included within the computing device 102, attached to the computing device, plugged into the computing device, or otherwise associated with the computing device 102. In other examples, the data storage device 138 includes a remote data storage accessed by the computing device via the network 112, such as a remote data storage device, a data storage in a remote data center, or a cloud storage.

The memory 108 in some examples stores one or more computer-executable components, such as, but not limited to, a prompt manager 140. The prompt manager 140 is a software component that, when executed by the processor 106 of the computing device 102, obtains the selected code segment 130 from the original document 126 and the request 128 for an action associated with the selected code segment. The request 128 is obtained from the original prompt 122. In this example, the prompt 122 is generated by the user via a user interface, such as, but not limited to, the UI device 120 and/or the user interface device 110.The UI device 120, in other examples, includes a chat interface. In these examples, the system receives the request 128 from the user via the chat interface associated with the UI device 120. In some examples, the user provides the request for the LLM via an in-line chat feature associated with the original source code document. This feature consists of a user opening up "in-line chat", entering a prompt for the LLM and then the expectation is that the LLM modifies the source code of the user with the given directions.

In an example scenario, a portion of an original source code document includes hexadecimals embedded within one or more segments of the code, such as a line of code that states: (charCode>=0x2E80&& charCode<=0xD7AF). The user inputs a request to "convert the numbers to decimal," within an in-line chat prompt field. In response, the system automatically edits the document to convert all the numbers into decimals. In this example, the above line of code is modified to state: (charCode>=11904&& charCode<=55215).

In some examples, the system issues two LLM queries. The first one is to determine the user intent (e.g. edit existing code, generate new code, create a unit test, etc.). The second query is the actual modified prompt optimized for the user intent and which also contains the user's source code and the user's prompt.

In some examples, the prompt manager 140 generates a compacted tree 150 including a subset of one or more removable nodes 152. The compacted tree 150 is a data structure having a plurality of removable nodes. The compacted tree is a representation of the syntactical structure of a file or other document. The compacted tree may also be referred to as an overlay tree.

Each removable node is a node selected from a plurality of nodes associated with the AST 142 and placed within a syntactic container. A syntactic container refers to a code segment having a beginning marker at a start of the code segment and an ending marker at the end of the code segment. The syntactic container encloses a portion of code that is syntactically valid. A removable node is an element in the AST 142 corresponding to a portion of code that maintains syntactic validity when removed from the original document 126. A removable node defines an AST element or subset of AST elements, that, when removed from the AST and copied into the compacted tree 150, corresponds to one or more portions of the original document that remains a valid syntactic document after other portions of the original document have been omitted.

The portion of code corresponding to the removable node has syntactic validity. In other words, eliding a removable node preserves syntax but not necessarily the complex semantics of the original document(s).

The prompt manager 140 generates score(s) 154 for the subset of removable nodes in the compacted tree 150. Each score indicates a degree of relevance or usefulness of a given removable node to the selected code segment. If a removable node corresponds to a code segment that is very relevant to the selected code segment, the removable node receives a score that is better than a score given to a removable node corresponding to a code segment that is irrelevant to the selected code segment.

In some examples, a lower score indicates a more relevant code segment or removable node. In other examples, a higher score indicates a more relevant code segment or removable node. The score can include a numeric score on a scale of one to ten, a decimal score in a scale of zero to one, a letter score, an alphanumeric score, a percentage score, or any other type of score.

In some examples, the score is generated using a metric. The metric can include any type of metric for gauging relevance of one piece of code or text to another piece of code or text. In some examples, the score is calculated using a distance metric in which a piece of code is given a higher score the closer the piece of code is located to the selected code segment in the original document. Thus, a contiguous portion of the code receives a higher score than a non-contiguous portion of the code located farther away from the selected code segment in the original document. However, the examples are not limited to calculating the score based solely on a metric.

Another example of a score might be in relation to other ambient contexts available in the tool. The score function might be higher for code related to the selection, but it might be higher for other reasons, such as temporal factors or useful relative to other concepts. In an example scenario, the user edited a portion of the code in a range, such as if the user types on lines 10-12 of a document. When doing a prompt a few minutes later with the selection on line 500 it might be relevant to include lines 10-12 because they are relevant from a temporal dimension.

Similarly, if the user looks at a piece of code (scrolled into view). The score for that code could be boosted. The more recent the code section was looked at, the higher the score. Suppose the user has selected some code and the code has squiggles / diagnostics (like errors or warnings generated by a compiler). In some examples, the system probes the diagnostics and extracts relevant code locations or symbols from the diagnostic text. A simple example is something like "Class X does not implement interface Y correctly; member Z is missing". The system then goes to definition of Y.Z and boosts its score even if Z itself is not written in the selected code (it is missing, so a similarity score would not pick it up).

In other examples, the score is calculated based on functional similarity. Functional similarity measures how close two different code segments are in terms of semantic meaning. Functional similarity can be calculated using a deep learning model or other ML model. In still other examples, the score is determined based on common words, terms or phrases appearing in both the selected code segment and the unselected code segment associated with a removable node. If a combination of characters (word, phrase, abbreviation, or symbol) in a selected code segment also appears in an unselected code segment, the removable node associated with that unselected code segment receives a higher score. For example, if the selected code segment refers to a square root, any removable node associated with a code segment that also includes the words "square root" or an abbreviation or symbol for square root receives a higher score than a code segment that does not. The more combinations of characters in common, the higher the score for that removable node.

The prompt manager 140, in other examples, identifies a set of most relevant nodes in the subset of removable nodes based on the score(s) 154 associated with the subset of removable nodes. The prompt manager 140 generates the compacted document 156 including the selected code segment 130 and a set of relevant code segments corresponding to each node in the set of most relevant nodes for inclusion in a modified prompt 158, which is sent to the LLM 124 via the network 112. If a response to the modified prompt is received from the LLM 124 that includes a set of one or more edit(s) 136, the prompt manager 140 integrates the edit(s) 136 into an edited version 160 of the original document 126. The edited version 160 of the original document 126 is provided to a user via the user interface device in a syntactically correct form.

In some examples, the LLM 124 includes an artificial intelligence (AI) programming assistant to assist users with modifying and editing source code. The source code provided to the LLM is defined by selection placeholders indicating a location of selected code. The LLM performs software development related tasks associated with creating code, modifying existing code, summarizing code, generating code-related comments, etc.

In the example of FIG. 1, the AST is obtained from a data storage device. However, in other examples, the AST is generated by the prompt manager. In these examples, the prompt manager creates the AST of the source code such as by using a compiler. The AST nodes are grouped together into removable nodes which can be elided without introducing syntactic errors into the compacted document created using the removable nodes. In other words, the system creates a compacted (mapped) tree which only contains nodes that can be elided while leaving behind a syntactically valid document. In some cases, the AST nodes are labeled as being removable or not removable (unremovable).

In some examples, the prompt manager includes an iterative algorithm that consists of placing all nodes of such a tree, and using a score function to gradually add nodes to the resulting document until the resulting compacted document is too large such that the token size of the prompt would be greater than the allocated token budget (threshold token limit). Whenever a node is included, the system automatically includes its parents to avoid having "dangling" source code. In other words, if a given node is determined to be relevant enough to include in the modified prompt, the parent nodes for that given node is also included to ensure information in the parent nodes which may be relevant to the given node is also included. If the parent node(s) are omitted, it can result in a dangling source code which is missing one or more pieces of information necessary for syntactic accuracy.

However, all "child" nodes of the included parent nodes are not necessarily included. Moreover, in some examples, only required portions of the parent nodes are included. If a parent node includes information which is otherwise already included in another portion of the compacted document, those unneeded (repetitive or duplicative) pieces of information are selectively omitted. The algorithm is programming language agnostic because it operates on a generic tree data-structure.

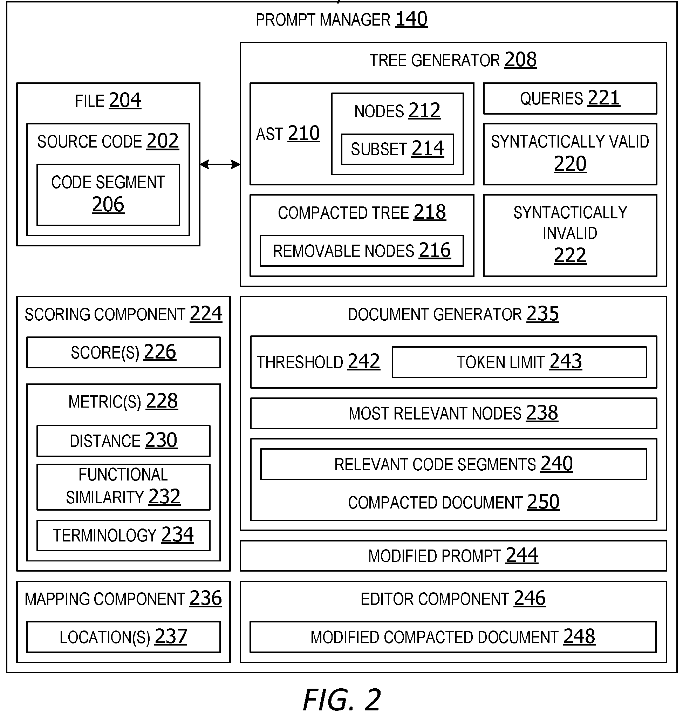

FIG. 2 is an exemplary block diagram illustrating a prompt manager 140 for generating a modified query used to obtain syntactically valid responses from a large language model (LLM). In some examples, the prompt manager 140 receives inputs, such as, but not limited to, a file containing source code, a cost function that is evaluated for a removable leaf node of the compacted tree, and/or a value for the maximum number of characters that are allowed in a prompt to the LLM. The source code 202 file 204 is an original source code document, such as, but not limited to, the original document 126 in FIG. 1. The prompt manager 140 identifies a selected code segment 206. The selected code segment 206 is a portion of code selected by the user. The prompt manager 140 in this example identifies the selected code segment 206 in real-time as the user is selecting the code segment.

A tree generator 208 is a software component that obtains an AST 210 corresponding to the source code 202 file 204 or other original document, such as, but not limited to, the original document 126 in FIG. 1. In other examples, the tree generator 208 generates the AST 210, such as by using a compiler.

The tree generator 208 identifies a subset 214 of nodes in the plurality of nodes 212 in the AST 210 corresponding to code segments that can be removed from the original document without creating syntactical errors in the compacted document 250. T The tree generator 208 identifies a subset 214 of nodes in the plurality of nodes 212 in the AST 210 corresponding to code segments that can be removed from the original document without creating syntactical errors in the original document in compacted form. The original document in compacted form is referred to as a compacted document 250. The subset 214 of removable nodes 216 are used to create a compacted tree 218. The compacted tree 218 contains a subset of the nodes in the original AST. The compacted tree 218 is a tree data structure, such as, but not limited to, the compacted tree 150 in FIG. 1. The term subset of removable node refers to one or more nodes of the AST and not all nodes of the AST. The removable nodes are the nodes which can be removed from the AST without affecting syntactic validity of a source code document corresponding to the AST.

Thus, the subset of removable nodes can include all the removable nodes from the AST or only some of the removable nodes. In other words, the subset of removable nodes can include one or more removable nodes from the AST while omitting one or more removable nodes from the AST in some examples. While in other examples, the subset of removable nodes includes all the removable nodes. The number of removable nodes included in the subset of removable nodes used to create the compacted document is determined based on the threshold prompt size limit.

The subset 214 of removable nodes 216 is used to create a compacted tree 218. The compacted tree 218 contains a subset of the nodes in the original AST. The compacted tree 218 is a tree data structure, such as, but not limited to, the compacted tree 150 in FIG. 1.

In some examples, the tree generator 208 identifies removable nodes by sending a series of queries 221 associated with each node to the AST. Each query includes a portion of the code corresponding to a node in the AST. The system queries the AST to determine which nodes are safe to delete without introducing syntax errors into the compacted document due to the removed portion of the document corresponding to the removable nodes copied into the compacted document. A parser can pass and/or parse a removable node without errors after removal of the node. In other words, a parser can parse source code corresponding to a removable node without errors. If a response is received without syntactical errors, the node is a removable node. The response to each query indicates whether a given node is syntactically valid 220 or syntactically invalid 222.

In some examples, a scoring component 224 generates one or more score(s) 226 for each removable node in the subset 214 of removable nodes 216 using one or more metric(s) 228. The metric(s) 228 includes any type of metric used to gauge a degree of usefulness or applicability of one portion of code to another portion of code. The metrics are used to determine whether a portion of code should be included in the compacted file. In this example, the metrics include a distance metric 230, a functional similarity 232 metric, and/or a common terminology 234 metric.

A mapping component 236, in some examples, maps each removable node to a location in the compacted document 250. The mapping component 236 maps each removable node to a portion of the original source code 202 file 204. In other examples, the mapping component 236 maps the location(s) 237 of one or more of the portions of the code corresponding to each removable node to a location or address in the source code 202 file 204. The system cannot simply copy and paste the edits suggested by the LLM back into the original document because the compacted document contains non-contiguous code segments. The mapping enables the system to accurately identify the correct location (origin) for each portion of code in the compacted document. If an original source code segment is located at line 335 in the original document and it is passed to the LLM as line 186 in the compacted document (summarized document input in prompt), the mapping component maps the code at line 186 back to line 335 when copying the edit obtained from the LLM back into the source code.

For example, a line of code in the compacted document 250 is mapped to the original location of that line of code in the original document. If the LLM edits the line of code in the compacted document 250, the prompt manager 140 maps that edit to the original location of the line of code in the original document. The prompt manager copies the edit(s) from the compacted document 250 over into the corresponding line of code in the original document. In that manner, any changes made to the compacted document are reproduced accurately in the edited version of the original document.

A document generator 235 identifies a set of most relevant nodes 238 from the subset 214 of removable nodes 216 based on the score(s) 226 for each removable node. The term "set" means one or more and does not include the empty set. The score(s) indicate which nodes are most relevant to the selected code segment. The document generator 235 selects one or more relevant code segments 240 corresponding to each node in the set of most relevant nodes 238 for inclusion in the compacted document 250. The document generator 235 generates the compacted document 250.

The compacted document 250 includes the selected code segment 206 and the most relevant code segments 240 which do not exceed a threshold 242 token limit 243. The threshold token limit 243 is a maximum number of tokens which a modified prompt 244 can include. For example, an original source code document that includes 15,000 characters cannot be included in a prompt with a threshold 242 of 3,000 characters. Therefore, the prompt manager identifies the most relevant segments of code to include in the compacted document provided to the LLM in the modified prompt.

In this manner, the system ensures that the modified prompt 244 includes the maximum number of relevant code segments to assist the LLM in determining context for the selected code segment and preventing syntax errors in the compacted document for creation of more accurate edits to the original document without providing the original document to the LLM.

An editor component 246, in some examples, generates a modified compacted document 248 using a set of one or more edits received from the LLM. In other examples, the editor component 246 receives the modified compacted document 248, including the set of edits integrated into the compacted document, from the LLM. The editor component uses the mapping of the code segments in the compacted document with the original document to reproduce the edits in the compacted document within the correct lines of code and locations in the original document, such as the source code 202 file 204. For example, if an original source code file includes ten lines of code and the set of edits from the LLM received in response to the modified prompt include three lines of code with changes or other modifications, the prompt manager 140 maps those three lines of code in the compacted document back to the original document. Using the mapping, the system identifies those three lines of modified code. The three lines of code in the original document are updated/modified to include the changes made by the LLM. The other seven lines of code in the original document remain unaltered in the edited version of the original document. In this manner, the system ensures that edits provided by the LLM using a compacted (abridged) version of the original document are accurately and completely re-integrated back into the original document.

In a non-limiting example, the output of compacting a large class includes the following:

```
       class Statistics {
       public method 1() {...}
       public method2() {...}
       public getAccumulatedValueInPercentages() {
       // TODO: implement this!
       }
       public method3() {...}
       public method4() {...}
       public getAccumulatedValue() {
       // compute accumulated value
       return sum(this.values) / this.values.length;
       }
       }
```

In this example, assume the user selected the method getAccumulatedValueInPercentages and asked the LLM to "implement the method". The prompt manager creates a cost function which splits up the selection into terms like "accumulated", "value", "in", "percentages" and boost the score of leaves contained in the "getAccumulatedValue" method because similar terms appear there. This allows the prompt manager to elide the non-relevant methods: method1, method2, method3 and method4 which might be very large, and which might otherwise prevent the relevant source code (which is farther away in the file) to be included in the prompt. The score function uses a combination of scope distance, depth, and character distance to the selection to decide which sections of code are most relevant to keep and which code segments should be deleted. This enables the system to interpret replies and convert them towards code edits that are automatically applied to the original source code more accurately.

FIG. 3 is an exemplary flow chart illustrating operation of the computing device to generate a syntactically valid edited version of an original document using compacted code. The process 300 shown in FIG. 3 is performed by a prompt manager component, executing on a computing device, such as the computing device 102 or the user device 116 in FIG. 1.

The process begins by receiving a selected code segment and a request for an action to be performed with regard to the selected code segment at operation 302. The selected code segment is a portion of code within one or more original document(s) selected by a user via a user interface, such as, but not limited to, the user interface device 110 and/or the UI device 120 in FIG. 1. The prompt manager generates a compacted tree at operation 304. The compacted tree is a subset of nodes from an AST, such as, but not limited to, the compacted tree 150 in FIG. 1 and/or the compacted tree 218 in FIG. 2. The prompt manager 140 identifies one or more of the most relevant nodes in the removable nodes of the compacted tree at operation 306. In some examples, the prompt manager identifies the most relevant nodes using scores for the removable nodes. The prompt manager generates a compacted document at operation 308. The compacted document includes the most relevant code segments which do not exceed the threshold token limit for the prompt. The prompt manager submits the modified prompt including the request and the compacted document at operation 310. The modified prompt is transmitted to an LLM, such as, but not limited to, the LLM 124 in FIG. 1. The prompt manager determines if a response is received from the LLM at operation 312. If yes, the prompt manager integrates the edit(s) received in the response into the original document(s) at operation 314.The edited version of the original document(s) are presented to a user at operation 316.

In some examples, the edited version is provided to the user via a UI device such as part of an interactive development environment. The user is able to select the edited version of the original document for input to a source code repository and/or for input to a process for forming executable code executing an application. The process terminates thereafter.

In some cases, the original document is source code of an application controlling an apparatus such as a head mounted display, a game console, a data center compute node, a communications network. In some cases, the edited version of the original document is incorporated into the executable code of the application either automatically or in response to user input.

While the operations illustrated in FIG. 3 are performed by a computing device, aspects of the disclosure contemplate performance of the operations by other entities. In a non-limiting example, a cloud service performs one or more of the operations. In another example, one or more computer-readable storage media storing computer-readable instructions may execute to cause at least one processor to implement the operations illustrated in FIG. 3.

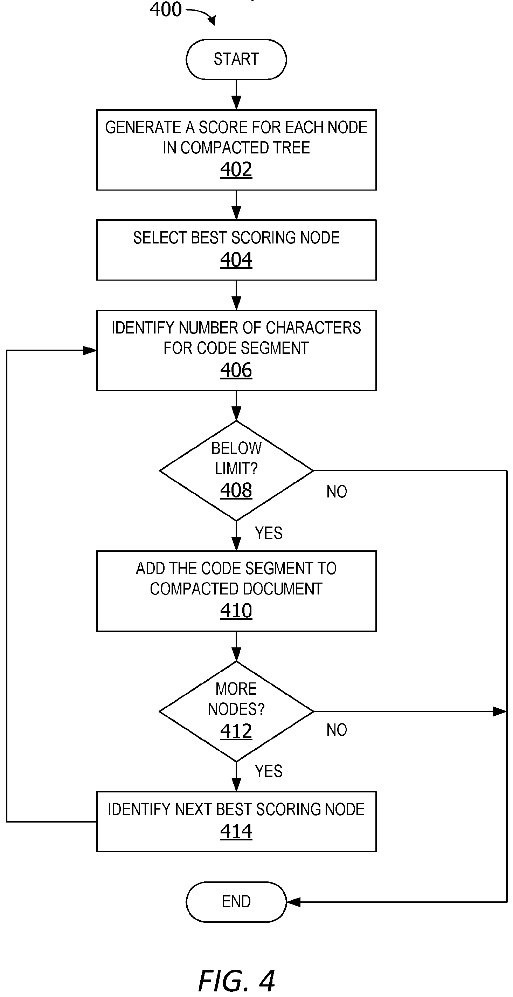

Referring now to FIG. 4, an exemplary flow chart illustrating operation of the computing device to identify relevant code segments for inclusion in a compacted document is shown. The process 400 shown in FIG. 4 is performed by a prompt manager component, executing on a computing device, such as the computing device 102 or the user device 116 in FIG. 1.

The process begins by generating a score for each node in a compacted tree at operation 402. The prompt manager selects a best scoring node from the removable nodes in the compacted tree at operation 404. The prompt manager identifies a number of characters for the code segment corresponding to the best scoring node from the removable nodes at operation 406. The prompt manager determines if the number of characters of the code segment is below a threshold limit at operation 408. If not, the process terminates thereafter. If the number of characters, when added to the compacted document, remains below the threshold limit, the prompt manager adds the code segment to the compacted document at operation 410. The prompt manager determines if there are more removable nodes in the compacted tree at 412. If not, the process terminates thereafter. If there are more removable nodes remaining which have not yet been analyzed, the prompt manager identifies the next best scoring node at operation 414. The number of characters of the code segment for the next best scoring code is identified at operation 406. The prompt manager determines if the number of characters or token limit for the compacted document is below the threshold limit if the code segment is added to the compacted document at operation 408. If yes, the code segment is added to the compacted document. The prompt manager iteratively executes operations 406 through 414 until no nodes remain at operation 412 and/or no additional code segments can be added without exceeding the threshold token limit at operation 408. The process terminates thereafter.

While the operations illustrated in FIG. 4 are performed by a computing device, aspects of the disclosure contemplate performance of the operations by other entities. In a non-limiting example, a cloud service performs one or more of the operations. In another example, one or more computer-readable storage media storing computer-readable instructions may execute to cause at least one processor to implement the operations illustrated in FIG. 4.

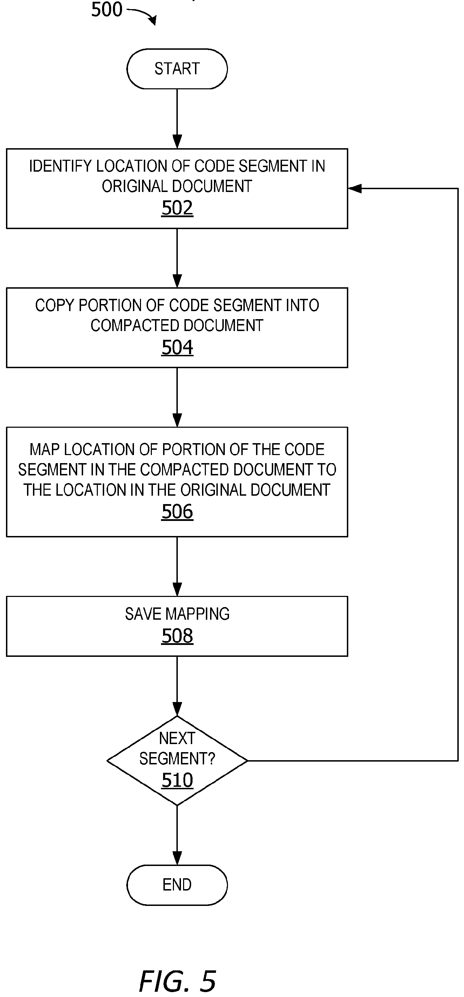

FIG. 5 is an exemplary flow chart illustrating operation of the computing device to create a mapping between code segments in a compacted document and an original source code document. The process 500 shown in FIG. 5 is performed by a prompt manager component, executing on a computing device, such as the computing device 102 or the user device 116 in FIG. 1.

The process begins by identifying a location of a code segment in an original document at 502. The prompt manager copies a portion of the code segment into the compacted document at operation 504. The portion of the code segment can include the entire code segment or portions of the code segment with other portions of the code segment elided (removed). The prompt manager maps a location of the portion of the code segment in the compacted document to a corresponding location in the original document at operation 506. The mapping is done by a mapping component, such as, but not limited to, the mapping component 224 in FIG. 2. The mapping is saved at operation 508. In some examples, the mapping is saved to a data storage, such as, but not limited to, the data storage device 138 in FIG. 1 and/or a cloud storage.

A determination is made whether a next code segment remains unmapped at operation 510. If yes, the prompt manager iteratively executes operations 502 through 510 until all code segments in the compacted document are mapped to locations in the original document and no code segments remain unmapped at operation 510. The process terminates thereafter.

While the operations illustrated in FIG. 5 are performed by a computing device, aspects of the disclosure contemplate performance of the operations by other entities. In a non-limiting example, a cloud service performs one or more of the operations. In another example, one or more computer-readable storage media storing computer-readable instructions may execute to cause at least one processor to implement the operations illustrated in FIG. 5.

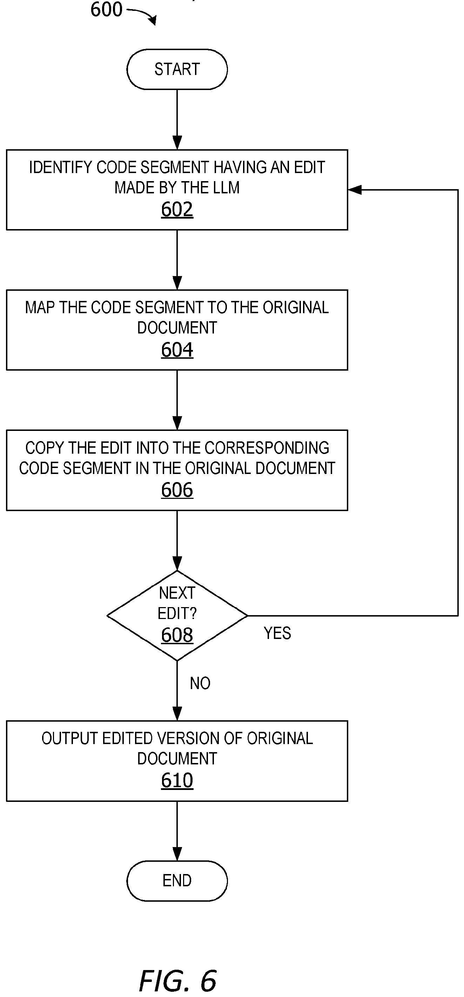

FIG. 6 is an exemplary flow chart illustrating operation of the computing device to re-integrate edits received from an LLM in response to a modified prompt back into an original source code document. The process 600 shown in FIG. 6 is performed by a prompt manager component, executing on a computing device, such as the computing device 102 or the user device 116 in FIG. 1.

The process begins by identifying a code segment having an edit made by the LLM at operation 602. The prompt manager maps the code segment to the original document at operation 604. The prompt manager maps the code segment to a location in the original document using a mapping created by a mapping component, such as, but not limited to, the mapping component 236 in FIG. 2. The prompt manager copies the edit into the corresponding code segment in the original document at operation 606. A determination is made whether a next edit remains uncopied into the original document at operation 608. If yes, the prompt manager iteratively executes operations 602 through 608. When no edits remain uncopied into the original document, the edited version of the original document is output to the user at operation 610. The process terminates thereafter.

While the operations illustrated in FIG. 6 are performed by a computing device, aspects of the disclosure contemplate performance of the operations by other entities. In a non-limiting example, a cloud service performs one or more of the operations. In another example, one or more computer-readable storage media storing computer-readable instructions may execute to cause at least one processor to implement the operations illustrated in FIG. 6.

### Additional Examples

In some examples, a compacted document is obtained by applying a set of edits (summarization edits) to the original document. The LLM only "sees" the compacted document. The LLM generates edits to the code based on the compacted document. The system interprets the generated code in its replies and generates an edit on the compacted document. The system applies this edit to the original document. The system re-integrates the LLM edit(s) against the summarization edits in order to apply them to the original document. After doing so, the system updates the summarization edits to be rebased (copied) into the original document with the modification, such that the next LLM edit can be correctly computed and applied on the original document.

When a user inputs a request in a chat, the system adds additional input, such as source code segments, necessary syntactically for context in light of the selected portion of code and the request. The additional input is added into the prompt up to the token limit to add as much additional information as possible to assist the LLM in interpreting and understanding the selected code segment. When the LLM returns a response, that output goes back to prompt manager which decides where to re-insert the answer.

In some examples, the system applies a combination of scope distance, depth, and character distance to the selection of code segments to decide which code segments to keep and which code segments to elide. Some examples for scoring functions include code that is close to the user selection (distance to selection); symbols that can be referenced from the scope of the selection (visible symbols); and/or code that is similar using a term frequency inverse document frequency (TF-IDF) based score. The document can be split into selected code and unselected code. Each region is split in terms and the prompt manager computes TF-IDF for the selected code and for the rest of the code. A cost function is applied which looks at each removable node (leaf) and scores it against the similarity with the selection.

Multiple original documents can optionally be used with a single prompt. This might occur in situations in which symbols used in a first original document are defined in a second original document. In another example, all files in a repository can be considered when creating a prompt. In this case, the system generates a compacted document including code segments from one or more of the original documents. A single compacted tree is generated that represents all the original documents in some examples. In other examples, a different compacted tree is generated for each original document used with the prompt.

The system, in other examples, provides additional relevant segments of code in addition to the selected code segment preventing syntactically incorrect code from being passed to the LLM, which could cause the LLM to hallucinate and/or generate incorrect code responses to the user queries.

LLM prompts should be kept as short as possible because the longer the prompt, the more expensive the LLM request. There are also hard limits to the maximum token counts that can be sent to a LLM as part of a request. Oftentimes, an entire code file doesn't fit in the token budget. Therefore, in some examples, the prompt manager works over a transformed AST tree data structure (compacted tree) that allows the system to elide source code using a dynamic / configurable cost function. The resulting shorter document keeps the structural properties of the code, while selecting only regions which have the best score (e.g. closest to selection, visible symbols from the selection, similar to the selected code, etc.).

Removable nodes (elements) can be safely elided from a source code document and by eliding them, the resulting compacted document remains syntactically correct. For example, the statement "const x = 3 * 5;" in an AST usually contains three or more nodes to represent this statement, as a declaration and an assignment, and an expression. Eliding any of those three nodes would lead to an invalid document e.g. "const x = * 5", "const x =", etc. The system creates a mapped (compacted) tree which only contains removable nodes that can be safely elided, and which would leave behind a syntactically valid document. The system includes an iterative algorithm that places all leaves (removable nodes) of such a tree, and, using a score function, gradually add these leaves to the resulting document until the resulting compacted document would be too large or the size is predicted to exceed the allocated token budget if any additional nodes were added.

In other examples, the user does not select a code segment. For example, the system can receive a query in a sidebar chat UI such as "add a unit test for function X". In such a case, the user does not select code explicitly, but rather mentions a symbol from their program (from their workspace). It is then up to the system to identify the existing test file for function X, select a few tests as good examples (if they exist), select some code from the definition of function X (if it fits) and ask the LLM to generate additional unit tests. In these examples, the user does not necessarily need to give a selection of a code segment.

In other examples, the system makes summaries of eliding code (removable code segments). In still other examples, the system transforms source code to avoid duplications and reduce confusion.

In other examples, when a user provides input selecting the edited version of the original document, the system saves the edited version of the original document in a source code repository or incorporating the edited version of the original document into an executable file of an application This enables reduced burden of user input to the computer.

Alternatively, or in addition to the other examples described herein, examples include any combination of the following:
- map a removable node in the compacted tree to a portion of a function in the original document, wherein a portion of contents of the function is elided in the compacted document;
- responsive to receiving the set of edits from the LLM, mapping the compacted document location of each line of code having an edit in the set of edits to the mapped original document location;
- wherein an unedited line of code in the original document mapped to an edited line of code in the compacted document is modified to include the edit in the compacted document;
- wherein the original document is modified to include every edit in the set of edits made to the compacted document by the LLM;
- score each removable node in the subset of removable nodes using a metric, the score for each removable node indicating a functional relatedness of each code segment corresponding to the removable node relative to the selected code segment;
- identify the set of most relevant nodes in the subset of removable nodes based on the score for each removable node;
- generate a set of scores for the subset of removable nodes based on a distance of each removable node from the selected code segment;
- generate a set of scores for the subset of removable nodes based on a functional (semantic) similarity of a portion of code corresponding to each removable node with contents of the selected code segment;
- identify a size threshold for prompts to the LLM;
- select a number of removable nodes from the subset of removable nodes corresponding to non-contiguous code segments having a number of characters that is within the size threshold;
- identify one or more parent nodes associated with a selected removable node in the subset of removable nodes;
- including at least a portion of contents of the one or more parent nodes in the compacted document;
- receiving a prompt including a selected code segment from an original document and a request for an action associated with the selected portion of the code via a user interface device;
- generating a compacted tree comprising a subset of removable nodes selected from a plurality of nodes associated with the AST for the original document, wherein a removable node is an element in the AST corresponding to a portion of code that maintains syntactic validity when removed from the original document;
- identifying a set of most relevant nodes in the subset of removable nodes based on a plurality of scores associated with the subset of removable nodes;
- generating a compacted document comprising the selected portion of the code and a set of relevant code segments corresponding to each node in the set of most relevant nodes for inclusion in a modified prompt;
- submitting a modified prompt to an LLM, the modified prompt comprising the request for the action associated with the selected portion of the code and the compacted document;
- copying the edits into the original document to form an edited version of the original document in response to receiving a response to the modified prompt from the LLM including a set of edits;
- presenting the edited version of the original document to a user via the user interface device, wherein the edited version of the original document is syntactically correct;
- mapping a compacted document location of each non-contiguous code segment in the compacted document to an original document location of at least one line of code in the original document;
- scoring each removable node in the subset of removable nodes using a metric, the score for each removable node indicating a functional relatedness of each code segment corresponding to the removable node relative to the selected code segment;
- identifying the set of most relevant nodes in the subset of removable nodes based on the score for each removable node;
- generating a set of scores for the subset of removable nodes based on a distance of each removable node from the selected code segment;
- generating a set of scores for the subset of removable nodes based on a functional similarity of a portion of code corresponding to each removable node with contents of the selected code segment;
- generating a set of scores for the subset of removable nodes based on common terminology found in the selected code segment and removable code segments associated with the subset of removable nodes;
- identifying a user-configurable size threshold for prompts to the LLM;
- selecting a number of removable nodes from the subset of removable nodes corresponding to non-contiguous code segments having a number of characters that is within the size threshold;
- generating a summary document identifying changes in the set of edits made to the compacted document by the LLM;
- mapping each removable node in the subset of removable nodes to a location in the original document;
- receiving the request for the action from a user via a chat interface associated with the user interface device; and
- selecting a number of removable nodes from the subset of removable nodes corresponding to non-contiguous code segments having a number of characters that is within a maximum threshold range.

At least a portion of the functionality of the various elements in FIG. 1, FIG. 2, and FIG. 7 can be performed by other elements in FIG. 1, FIG. 2, and FIG. 7, or an entity (e.g., processor 106, web service, server, application program, computing device, etc.) not shown in FIG. 1, FIG. 2, and FIG. 7.

In some examples, the operations illustrated in FIG. 1, FIG. 2, and FIG. 7 can be implemented as software instructions encoded on a computer-readable medium, in hardware programmed or designed to perform the operations, or both. For example, aspects of the disclosure can be implemented as a system on a chip or other circuitry including a plurality of interconnected, electrically conductive elements.

In other examples, a computer readable medium having instructions recorded thereon which when executed by a computer device cause the computer device to cooperate in performing a method of compacting code using structural infrastructure, the method comprising receiving a prompt including a selected code segment from an original document and a request for an action associated with the selected portion of the code; obtaining the AST for the original document, the AST comprising a plurality of nodes, each node corresponding to a segment of code in the original document; generating a compacted tree comprising a subset of removable nodes in the plurality of nodes associated with the AST, wherein a removable node is an element in the AST corresponding to a portion of code that is removable from the original document without introducing syntactical errors; generating a score for each removable node in the subset of removable nodes using a metric, the score for each removable node indicating a functional relatedness of each code segment corresponding to the removable node relative to the selected code segment; identifying a set of most relevant nodes in the subset of removable nodes based on the score for each removable node; selecting a set of relevant code segments corresponding to each node in the set of most relevant nodes for inclusion in a compacted document; generating the compacted document comprising the selected set of relevant code segments and the selected portion of the code; and submitting a modified prompt to an LLM, the modified prompt comprising the request for the action associated with the selected portion of the code and the compacted document, wherein the original document is modified to include a set of edits provided by the LLM in response to the modified prompt.

While the aspects of the disclosure have been described in terms of various examples with their associated operations, a person skilled in the art would appreciate that a combination of operations from any number of different examples is also within scope of the aspects of the disclosure.

The term "Wi-Fi" as used herein refers, in some examples, to a wireless local area network using high frequency radio signals for the transmission of data. The term "BLUETOOTH^{®}" as used herein refers, in some examples, to a wireless technology standard for exchanging data over short distances using short wavelength radio transmission.

### Exemplary Operating Environment

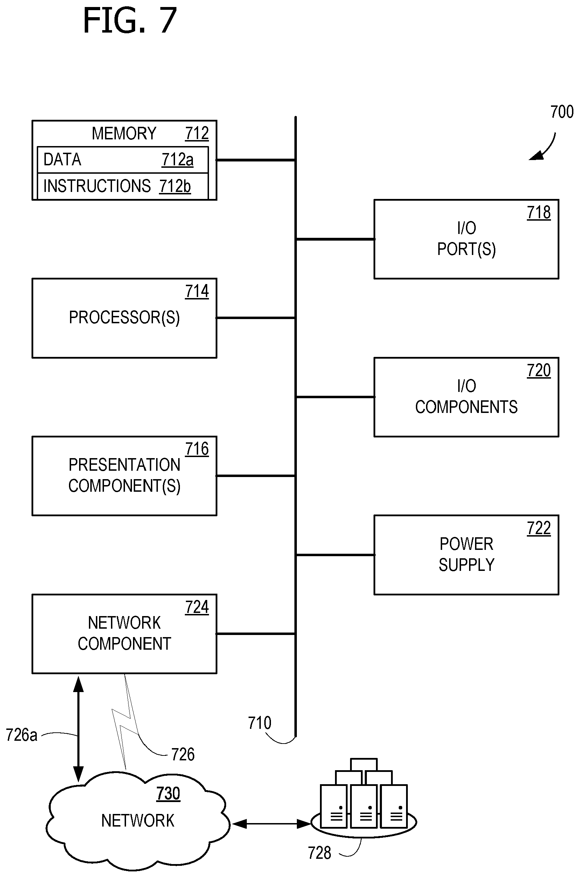

FIG. 7 is a block diagram of an example computing device 700 for implementing aspects disclosed herein and is designated as computing device 700. The computing device 700 is a computing device, such as the computing device 102 in FIG. 1. The computing device 700 is an example of a suitable computing environment and is not intended to suggest any limitation as to the scope of use or functionality of the examples disclosed herein. Neither should the computing device 700 be interpreted as having any dependency or requirement relating to any one or combination of components/modules illustrated. The examples disclosed herein may be described in the general context of computer code or machine-useable instructions, including computer-executable instructions such as program components, being executed by a computer or other machine, such as a personal data assistant or other handheld device.

Program components including routines, programs, objects, components, data structures, and the like, refer to code that performs particular tasks, or implement particular abstract data types. The disclosed examples may be practiced in a variety of system configurations, including personal computers, laptops, smart phones, mobile tablets, hand-held devices, consumer electronics, specialty computing devices, etc. The disclosed examples may also be practiced in distributed computing environments when tasks are performed by remote-processing devices that are linked through a communications network.

Computing device 700 includes a bus 710 that directly or indirectly couples the following devices: computer-storage memory 712, one or more processors 714, one or more presentation component(s) 716, I/O ports 718, I/O components 720, a power supply 722, and a network component 724. While computing device 700 is depicted as a single device, multiple computing devices 700 may work together and share the depicted device resources. For example, memory 712 may be distributed across multiple devices, and processor(s) 714 may be housed with different devices.

Bus 710 represents what may be one or more buses (such as an address bus, data bus, or a combination thereof). Although the various blocks of FIG. 7 are shown with lines for the sake of clarity, delineating various components may be accomplished with alternative representations. For example, a presentation component such as a display device is an I/O component in some examples, and some examples of processors have their own memory. Distinction is not made between such categories as "workstation," "server," "laptop," "hand-held device," etc., as all are contemplated within the scope of FIG. 7 and the references herein to a "computing device."

Memory 712 may take the form of the computer-storage media references below and operatively provide storage of computer-readable instructions, data structures, program modules and other data for computing device 700. In some examples, memory 712 stores one or more of an operating system, a universal application platform, or other program modules and program data. Memory 712 is thus able to store and access data 712a and instructions 712b that are executable by processor 714 and configured to carry out the various operations disclosed herein.

In some examples, memory 712 includes computer-storage media in the form of volatile and/or nonvolatile memory, removable or non-removable memory, data disks in virtual environments, or a combination thereof. Memory 712 may include any quantity of memory associated with or accessible by computing device 700. Memory 712 may be internal to computing device 700 (as shown in FIG. 7), external to computing device 700 (not shown), or both (not shown).

Examples of memory 712 in include, without limitation, RAM; read only memory (ROM); electronically erasable programmable read only memory (EEPROM); flash memory or other memory technologies; CD-ROM, digital versatile disks (DVDs) or other optical or holographic media; magnetic cassettes, magnetic tape, magnetic disk storage or other magnetic storage devices; memory wired into an analog computing device; or any other medium for encoding desired information and for access by computing device 700. Additionally, or alternatively, memory 712 may be distributed across multiple computing devices 700, for example, in a virtualized environment in which instruction processing is carried out on multiple computing devices 700. For the purposes of this disclosure, "computer storage media," "computer storage device," "computer-storage memory," "memory," and "memory devices" are synonymous terms for computer-storage memory 712, and none of these terms include carrier waves or propagating signaling. In some examples, the memory 712 is a memory such as, but not limited to, the memory 108 in FIG. 1.

Processor(s) 714 may include any quantity of processing units that read data from various entities, such as memory 712 or I/O components 720 and may include CPUs and/or GPUs. Specifically, processor(s) 714 are programmed to execute computer-executable instructions for implementing aspects of the disclosure. The instructions may be performed by the processor, by multiple processors within computing device 700, or by a processor external to client computing device 700. In some examples, processor(s) 714 are programmed to execute instructions such as those illustrated in the in the accompanying drawings.

Moreover, in some examples, processor(s) 714 represent an implementation of analog techniques to perform the operations described herein. For example, the operations may be performed by an analog client computing device 700 and/or a digital client computing device 700. In some examples, the processor(s) 714 include one or more processors, such as but not limited to, the processor 106 in FIG. 1.

Presentation component(s) 716 present data indications to a user or other device. Exemplary presentation components include a display device, speaker, printing component, vibrating component, etc. One skilled in the art will understand and appreciate that computer data may be presented in a number of ways, such as visually in a GUI, audibly through speakers, wirelessly between computing devices 700, across a wired connection, or in other ways. I/O ports 718 allow computing device 700 to be logically coupled to other devices including I/O components 720, some of which may be built in. Example I/O components 720 include, for example but without limitation, a microphone, joystick, game pad, satellite dish, scanner, printer, wireless device, etc.

Computing device 700 may operate in a networked environment via network component 724 using logical connections to one or more remote computers. In some examples, network component 724 includes a network interface card and/or computer-executable instructions (e.g., a driver) for operating the network interface card. Communication between computing device 700 and other devices may occur using any protocol or mechanism over any wired or wireless connection.

In some examples, network component 724 is operable to communicate data over public, private, or hybrid (public and private) using a transfer protocol, between devices wirelessly using short range communication technologies (e.g., near-field communication (NFC), Bluetooth^{™} branded communications, or the like), or a combination thereof. Network component 724 communicates over wireless communication link 726 and/or a wired communication link 726a to a cloud resource 728 across network 730. Various different examples of communication links 726 and 726a include a wireless connection, a wired connection, and/or a dedicated link, and in some examples, at least a portion is routed through the internet.

Exemplary computer-readable media include flash memory drives, digital versatile discs (DVDs), compact discs (CDs), floppy disks, and tape cassettes. By way of example and not limitation, computer-readable media comprise computer storage media and communication media. Computer storage media include volatile and nonvolatile, removable, and non-removable media implemented in any method or technology for storage of information such as computer-readable instructions, data structures, program modules and the like. Computer storage media are tangible and mutually exclusive to communication media. Computer storage media are implemented in hardware and exclude carrier waves and propagated signals. Computer storage media for purposes of this disclosure are not signals per se. Exemplary computer storage media include hard disks, flash drives, and other solid-state memory. In contrast, communication media typically embody computer-readable instructions, data structures, program modules, or the like, in a modulated data signal such as a carrier wave or other transport mechanism and include any information delivery media.

Although described in connection with an exemplary computing system environment, examples of the disclosure are capable of implementation with numerous other special purpose computing system environments, configurations, or devices.

Examples of well-known computing systems, environments, and/or configurations that can be suitable for use with aspects of the disclosure include, but are not limited to, mobile computing devices, personal computers, server computers, hand-held or laptop devices, multiprocessor systems, gaming consoles, microprocessor-based systems, set top boxes, programmable consumer electronics, mobile telephones, mobile computing and/or communication devices in wearable or accessory form factors (e.g., watches, glasses, headsets, or earphones), network PCs, minicomputers, mainframe computers, distributed computing environments that include any of the above systems or devices, and the like. Such systems or devices can accept input from the user in any way, including from input devices such as a keyboard or pointing device, via gesture input, proximity input (such as by hovering), and/or via voice input.

Examples of the disclosure can be described in the general context of computer-executable instructions, such as program modules, executed by one or more computers or other devices in software, firmware, hardware, or a combination thereof. The computer-executable instructions can be organized into one or more computer-executable components or modules. Generally, program modules include, but are not limited to, routines, programs, objects, components, and data structures that perform tasks or implement abstract data types. Aspects of the disclosure can be implemented with any number and organization of such components or modules. For example, aspects of the disclosure are not limited to the specific computer-executable instructions, or the specific components or modules illustrated in the figures and described herein. Other examples of the disclosure can include different computer-executable instructions or components having more functionality or less functionality than illustrated and described herein.

In examples involving a general-purpose computer, aspects of the disclosure transform the general-purpose computer into a special-purpose computing device when configured to execute the instructions described herein.

The examples illustrated and described herein as well as examples not specifically described herein but within the scope of aspects of the disclosure constitute exemplary means for compacting code using structural information. For example, the elements illustrated in FIG. 1, FIG. 2, and FIG. 3, such as when encoded to perform the operations illustrated in FIG. 3, FIG. 4, FIG. 5, and FIG. 6, constitute exemplary means for receiving a prompt including a selected code segment from an original document and a request for an action associated with the selected portion of the code via a user interface device; exemplary means for generating a compacted tree comprising a subset of removable nodes selected from a plurality of nodes associated with the AST for the original document; exemplary means for identifying a set of most relevant nodes in the subset of removable nodes based on a plurality of scores associated with the subset of removable nodes; exemplary means for generating a compacted document comprising the selected portion of the code and a set of relevant code segments corresponding to each node in the set of most relevant nodes for inclusion in a modified prompt; exemplary means for submitting a modified prompt to an LLM; exemplary means for copying the edits into the original document to form an edited version of the original document in response to receiving a response to the modified prompt from the LLM including a set of edits; and exemplary means for presenting the edited version of the original document to a user via the user interface device, wherein the edited version of the original document is syntactically correct.

Other non-limiting examples provide one or more computer storage devices having a first computer-executable instructions stored thereon for providing syntactically correct compacted code. When executed by a computer, the computer performs operations including generating a compacted tree comprising a subset of removable nodes selected from a plurality of nodes associated with the AST for the original document, wherein a removable node is an element in the AST corresponding to a portion of code that maintains syntactic validity when removed from the original document; identifying a set of most relevant nodes in the subset of removable nodes based on a plurality of scores associated with the subset of removable nodes; generating a compacted document comprising the selected portion of the code and a set of relevant code segments corresponding to each node in the set of most relevant nodes for inclusion in a modified prompt; submitting the modified prompt to the LLM, the modified prompt comprising the request for the action associated with the selected portion of the code and the compacted document; and responsive to receiving a response to the modified prompt from the LLM including a set of edits, integrate the edits into the original document to form an edited version of the original document, wherein the edited version of the original document is provided to a user via the user interface device in a syntactically correct form.

The order of execution or performance of the operations in examples of the disclosure illustrated and described herein is not essential, unless otherwise specified. That is, the operations can be performed in any order, unless otherwise specified, and examples of the disclosure can include additional or fewer operations than those disclosed herein. For example, it is contemplated that executing or performing an operation before, contemporaneously with, or after another operation is within the scope of aspects of the disclosure.

The indefinite articles "a" and "an," as used in the specification and in the claims, unless clearly indicated to the contrary, should be understood to mean "at least one." The phrase "and/or," as used in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to "A" only (optionally including elements other than "B"); in another embodiment, to B only (optionally including elements other than "A"); in yet another embodiment, to both "A" and "B" (optionally including other elements); etc.

As used in the specification and in the claims, "or" should be understood to have the same meaning as "and/or" as defined above. For example, when separating items in a list, "or" or "and/or" shall be interpreted as being inclusive, i.e., the inclusion of at least one, but also including more than one of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used shall only be interpreted as indicating exclusive alternatives (i.e., "one or the other but not both") when preceded by terms of exclusivity, such as "either" "one of "only one of or "exactly one of." "Consisting essentially of," when used in the claims, shall have its ordinary meaning as used in the field of patent law.

As used in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of 'A' and 'B'" (or, equivalently, "at least one of 'A' or 'B'," or, equivalently "at least one of 'A' and/or 'B'") can refer, in one embodiment, to at least one, optionally including more than one, "A", with no "B" present (and optionally including elements other than "B"); in another embodiment, to at least one, optionally including more than one, "B", with no "A" present (and optionally including elements other than "A"); in yet another embodiment, to at least one, optionally including more than one, "A", and at least one, optionally including more than one, "B" (and optionally including other elements); etc.

The use of "including," "comprising," "having," "containing," "involving," and variations thereof, is meant to encompass the items listed thereafter and additional items.

Use of ordinal terms such as "first," "second," "third," etc., in the claims to modify a claim element does not by itself connote any priority, precedence, or order of one claim element over another or the temporal order in which acts of a method are performed. Ordinal terms are used merely as labels to distinguish one claim element having a certain name from another element having a same name (but for use of the ordinal term), to distinguish the claim elements.

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense.

Examples enable dynamic eliding of code using structural information for syntactic validity. An identified code segment from an original document and a request for a large language model (LLM) to perform an action associated with the identified code segment is received. A compacted abstract syntax tree (AST) including removable nodes is generated based on the original document. The removable nodes are scored for relevance to the identified code segment. Code segments corresponding to the most relevant removable nodes are added to a compacted document without exceeding a configurable token limit for prompts to the LLM. A modified prompt including the identified code segment and the most relevant code segments is provided to the LLM. The edits received from the LLM in response to the modified prompt are mapped into the original document to create a syntactically valid edited version of the original source code while minimizing resource usage.

## Claims

1. A system comprising:
a processor; and
a computer-readable medium storing instructions that are operative upon execution by the processor to:
identify a code segment from an original document, the identified code segment associated with an action request for the identified code segment as a prompt to a large language model, LLM, via a user interface device;
generate (304) a compacted tree comprising a plurality of removable nodes selected from a plurality of nodes associated with an abstract syntax tree, AST, for the original document, wherein a removable node is an element in the AST corresponding to a portion of code that maintains syntactic validity within the portion of the code corresponding to the plurality of removable nodes are when removed from the original document;
identify (306) a set of nodes in the plurality of removable nodes using a plurality of scores associated with the plurality of removable nodes;
generate (308) a second document, smaller than the original document, the second document comprising the identified code segment and a set of code segments corresponding to each node in the set of nodes for inclusion in a modified prompt;
generate a modified prompt including the second document, the identified code segment, and the action request for the identified code segment;
submit (310) the modified prompt to the LLM via a network; and
responsive to receiving a response to the modified prompt from the LLM including a set of edits, integrate (314) the set of edits into the original document to form an edited version of the original document, wherein the edited version of the original document is provided to a user via the user interface device in a syntactically correct form.

2. The system of claim 1, wherein the instructions are further operative to:
map a removable node in the compacted tree, comprising the plurality of removable nodes, to a portion of a function in the original document, wherein a portion of contents of the function is elided in the second document.

3. The system of claim 1 or claim 2, wherein the instructions are further operative to:
generate a mapping of the second document to the original document, the mapping comprising a mapped location of each line of code in the second document to a corresponding location of a same line of code in the original document; and
responsive to receiving the set of edits from the LLM, mapping each line of code having an edit in the set of edits to the original document using the generated mapping, wherein an unedited line of code in the original document mapped to an edited line of code in the second document is modified to include the edit in the second document, wherein the original document is modified to include every edit in the set of edits made to the second document by the LLM.

4. The system of any preceding claim, wherein the instructions are further operative to:
score each removable node using a metric, the score for each removable node indicating a degree of functional relatedness of each code segment corresponding to the removable node relative to the identified code segment; and
identify the set of nodes in the plurality of removable nodes using the score for each removable node.

5. The system of any preceding claim, wherein the instructions are further operative to:
identify a parent node associated with a selected removable node in the plurality of removable nodes; and
including at least a portion of contents of the identified parent node in the second document.

6. The system of any preceding claim, wherein the instructions are further operative to:
generate a set of scores for the plurality of removable nodes using a functional similarity of a portion of code corresponding to each removable node with contents of the identified code segment.

7. The system of any preceding claim, wherein the instructions are further operative to:
identify a size threshold for prompts to the LLM; and
select a number of removable nodes from the plurality of removable nodes corresponding to non-contiguous code segments having a number of characters that is within the size threshold.

8. A method comprising:
identifying a code segment from an original document, the identified code segment associated with an action request for the identified code segment as a prompt to an LLM via a user interface device;
generating (304) a compacted tree comprising a plurality of removable nodes selected from a plurality of nodes associated with the AST for the original document, wherein a removable node is an element in the AST corresponding to a portion of code that maintains syntactic validity within the portion of the code corresponding to the removable nodes are when removed from the original document;
identifying (306) a set of nodes in the removable nodes using a plurality of scores associated with the removable nodes;
generating (308) a second document, smaller than the original document, the second document comprising the identified code segment and a set of code segments corresponding to each node in the set of nodes for inclusion in a modified prompt;
generating a modified prompt, the modified prompt including the second document and the action request for the identified code segment;
submitting (310) the modified prompt to an LLM via a network;
copying a set of edits into the original document to form an edited version of the original document in response to receiving a response to the modified prompt from the LLM including the set of edits; and
presenting (316) the edited version of the original document to a user via the user interface device, wherein the edited version of the original document is syntactically correct.

9. The method of claim 8, further comprising:
in response to user input selecting the edited version of the original document, saving the edited version of the original document in a source code repository, or incorporating the edited version of the original document into an executable file of an application.

10. The method of claim 8 or claim 9, further comprising:
scoring each removable node in the removable nodes using a metric, the score for each removable node indicating a functional relatedness of each code segment corresponding to the removable node relative to the identified code segment; and
identifying the set of nodes in the plurality of removable nodes using the score for each removable node.

11. The method of any of claims 8 to 10, further comprising:
generating a set of scores for the removable nodes using a distance of each removable node from the identified code segment.

12. The method of any of claims 8 to 11, further comprising:
generating a set of scores for the removable nodes using a functional similarity of a portion of code corresponding to each removable node with contents of the identified code segment.

13. The method of any of claims 8 to 12, further comprising:
generating a set of scores for the removable nodes using common terminology found in the identified code segment and removable code segments associated with the removable nodes.

14. The method of any of claims 8 to 13, further comprising:
identifying a user-configurable size threshold for prompts to the LLM; and
selecting a number of removable nodes from the removable nodes corresponding to non-contiguous code segments having a number of characters that is within the size threshold.

15. One or more computer storage devices having computer-executable instructions stored thereon, which, upon execution by a computer, cause the computer to perform operations comprising:
receiving a prompt including a code segment selected from an original document, the selected code segment associated with an action request for the selected code segment;
obtaining an AST for the original document, the AST comprising a plurality of nodes, each node corresponding to a segment of code in the original document;
generating (304) a compacted tree comprising a plurality of removable nodes in the plurality of nodes associated with the AST, wherein a removable node is an element in the AST corresponding to a portion of code that is removable from the original document without introducing syntactical errors;
generating a score for each removable node in the plurality of removable nodes using a metric, the score for each removable node indicating a functional relatedness of each code segment corresponding to the removable node relative to the selected code segment;
identifying (306) a set of nodes in the plurality of removable nodes using the score for each removable node;
selecting a set of code segments corresponding to each node in the set of nodes for inclusion in a second document;
generating (308) the second document and a modified prompt, the second document comprising the selected set of code segments and the selected code segment; and
submitting (310) the modified prompt to an LLM, the modified prompt comprising the request for the action associated with the selected code segment and the second document, wherein the original document is modified to include a set of edits provided by the LLM in response to the modified prompt, wherein the modified original document is provided to a user via the user interface device in a syntactically correct form.
